Europäisches Patentamt

European Patent Office

Office européen des brevets

(19)

(11) Publication number: **0 531 904 A2**

# EUROPEAN PATENT APPLICATION

(12)

(21) Application number: **92115187.4**

(22) Date of filing: **04.09.92**

(51) Int. Cl.5: **G06F 15/68**

(30) Priority: **10.09.91 US 757091**

(43) Date of publication of application:
**17.03.93 Bulletin 93/11**

(84) Designated Contracting States:
**DE FR GB**

(71) Applicant: **EASTMAN KODAK COMPANY**
**343 State Street**
**Rochester, New York 14650-2201(US)**

(72) Inventor: **Ghaderi, Mohsen**
**c/o EASTMAN KODAK COMPANY, 343 State**
**Street**
**Rochester, New York 14650-2201(US)**

(74) Representative: **Wagner, Karl H.**
**WAGNER & GEYER European Patent**
**Attorneys Gewürzmühlstrasse 5**
**W-8000 München 22 (DE)**

(54) **Method and apparatus for spatially variant filtering.**

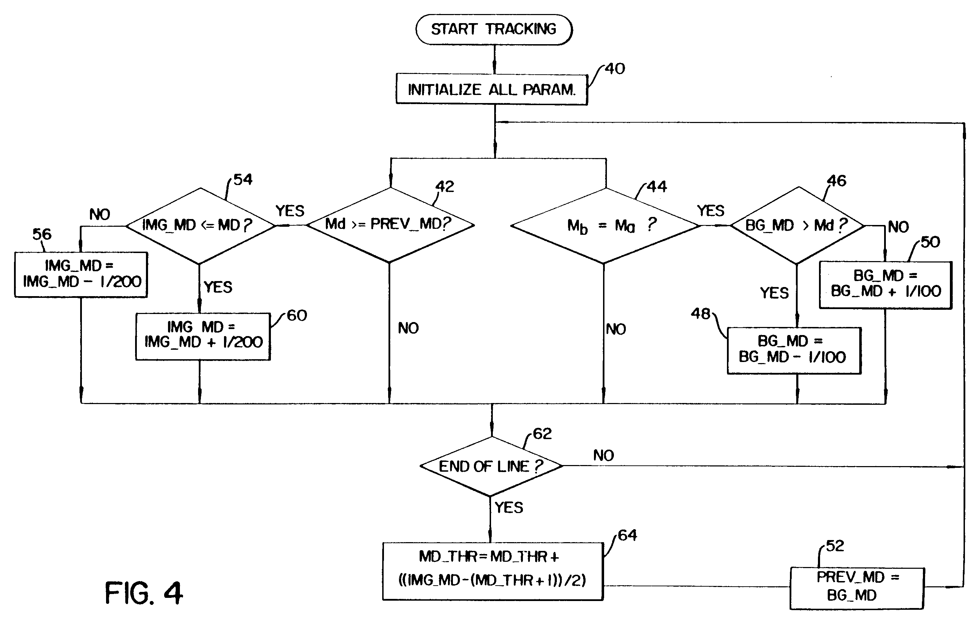

(57) A method for performing image processing is embodied in apparatus (10) that includes a classification circuit (86). The classification circuit (86) classifies each pixel (26) in an image partly on the basis of a comparison between (A) the variation among pixel values in a window (28) containing that pixel (26) and (B) an activity-level threshold (PREV_MD) determined by a routine (Figure 4) that computes that threshold from other pixel values in the image. On the basis of this classification, a multiplexer (82) selects among the outputs of a low-pass circuit (70) and a high-pass circuit (74, 76, 78, and 80) to produce a replacement pixel value for the raw pixel value that a scanner (20) produces by scanning an image source (16).

FIG. 5

## BACKGROUND OF THE INVENTION

The present invention is directed to image processing. It finds particular, although not exclusive, application in systems for recording text-type images.

Advances in data-storage technology have led to the desire to convert many of the older analog forms of data storage, such as paper or microfilm, to electronic or magnetic digital storage. A similar conversion is often used as an intermediate step in the processing of copier images. In all such arrangements the microfilm or other image source is scanned to generate pixel values representing the brightness or darkness of picture elements ("pixels") into which the imaging system divides the image.

This process necessarily results in some loss of information because of the spatial and level quantization that it involves. Additionally, some noise inevitably is introduced into the process. Because of these factors, the digitized image is sometimes considerably more difficult to read than the original image.

A number of approaches have been proposed to reduce the severity of this problem. One approach is to perform low-pass filtering, i.e., to reduce differences between individual pixel values and the general pixel-value levels in their neighborhoods. This tends to reduce the effects of noise and the visibility of "jaggies" that result from spatial quantization. But it also tends to blur images and thus reduce the sharpness that is more desirable for textual-type images.

Another approach is just the opposite, namely, to employ high-pass filtering, in which the differences between a pixel value and the general level in its neighborhood is increased. This tends to lend desirable sharpness to textual images, but it also amplifies noise and thereby makes "snow" in solid areas more noticeable.

## SUMMARY OF THE INVENTION

I have developed a filtering method, and an apparatus for performing it, that improve legibility by employing a filtering approach that varies in accordance with the level of variation in the image. The invention is an improvement in the type of image processing in which an image source is scanned to generate raw pixel values representing a raw version of the source's image, processed pixel values are generated by performing an image process on the raw pixel values, and the resulting processed image values are stored in an appropriate medium or the image that they represent is displayed. Such image processing may comprise a set of one or more processing steps, each of which produces associated pixel-value outputs representing a version of the image by processing associated pixel-value inputs representing the values of corresponding pixels in at least one other version of the image, such as the raw version that results from the scanning process or another version produced by one of the other processing steps.

In accordance with the invention, one of the processing steps includes establishing a variation window associated with each pixel and computing the variation in that processing step's input's pixel values associated with the pixels in that variation window. For each of a plurality of pixels in the image, a process choice is made between performing and refraining from performing one of a high-pass and a low-pass operation, and the process choice depends on the variation computed for that pixel. Then, in accordance with the process choices, pixel output values are generated by performing the high-pass or low-pass operation on some of the input pixel values but not performing it on others.

I have found that the use of such an approach greatly enhances the readability of a scanned image.

## BRIEF DESCRIPTION OF THE DRAWINGS

These and further features and advantages of the present invention are described below in connection with the accompanying drawings, in which:

Figure 1 is a block diagram of an imaging system of the type in which the teachings of the present invention would typically be employed;

Figure 2 depicts the windows over which the two average values employed in the present invention are computed;

Figure 3 is a graphical representation of the classification scheme that the illustrated embodiment of the present invention uses;

Figure 4 is a modified flow chart of the routine for determining the activity-level threshold used in the classification scheme of Figure 3; and

Figure 5 is a block diagram depicting circuitry of the type that one might employ to carry out the teachings of the present invention.

## DETAILED DESCRIPTION OF ILLUSTRATIVE EMBODIMENTS

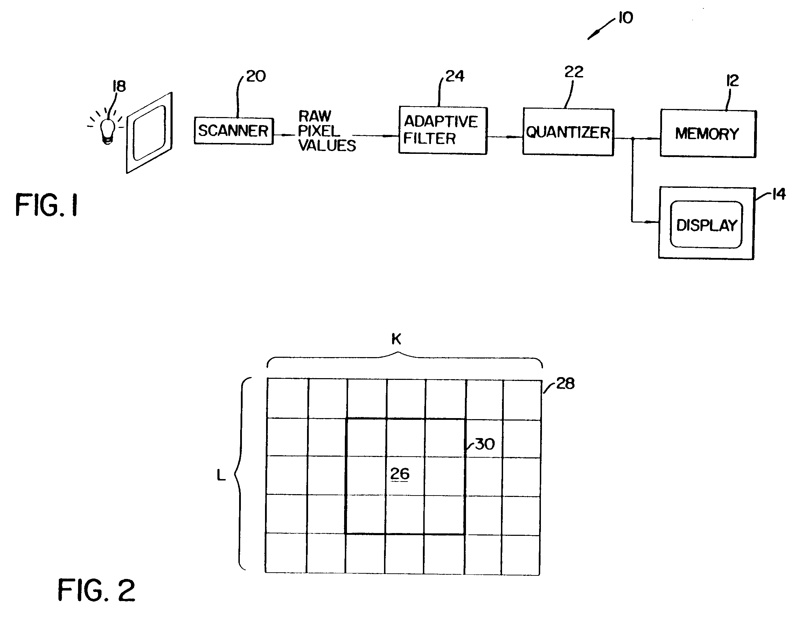

Figure 1 depicts a system 10 for recording in a memory 12 or displaying on a display device 14 the contents of an image source such as a microfilm 16. The display device 14 may be one of a number of types, such as a cathode-ray tube or the image-applying machinery in a photocopier. The microfilm might be illuminated by a light source 18 and the resulting image scanned by a scanner 20. The scanner 20 includes circuitry that treats the resultant image as being divided into a plurality of pixels, and it generates signals representing digitized values of those pixels. This raw pixel-value output is then subjected to some type of image processing before being stored or displayed.

The image process may comprise a sequence of steps, or it may include only one. For the sake of example, Figure 1 shows two step-performing elements, one of which is a quantizer 22 for reducing the number of bits per pixel. Other embodiments of the invention may not include such a feature. In accordance with the present invention, however, all include an adaptive filter 24 whose effect varies in accordance with the image contents. In the illustrated embodiment, it alternately performs high-pass and low-pass filtering. To determine which, the filter classifies pixels in accordance with their relative values and the value variations in their neighborhoods, as will now be described.

With each pixel in the image, such as the central pixel 26 of Figure 2, there are associated two windows. A larger window 28 is preferably sized to be about half the extent of the significant part of the imaging system's point-source function, i.e., of the light-intensity function that results from a single point source in the plane of the microfilm. The contents of this window are used to establish an average value $M_a$ ofthe values of all pixels within the larger window 28. This average can be a weighted average in which, for instance, the pixels closer to the central pixel 26 are weighted more heavily, but I prefer simply to use a straight average, in which all pixels are equally weighted. This value will be considered a threshold between those values that are considered background and those values that are considered to convey signal, i.e., character, information, as will be explained in more detail below.

To determine whether the pixel 26 is within the background or signal region, I compare the large-window neighborhood average $M_a$ with a local average $M_b$ computed over a smaller window 30. This window can be of any smaller size; in principle, in fact, it can be so small as to include only pixel 26. For noise-suppression purposes, however, I prefer to include a plurality of pixels.

In addition to $M_a$ and $M_b$, two further parameters are needed to classify a pixel. One of these is an "activity level" parameter $M_d$, which is a measure of the variation in pixel value in a window around the pixel 26 under consideration. For the sake of convenience, the illustrated embodiment employs for this purpose the same window 28 that is used to compute $M_a$, but such a choice is not necessary.

The variation may be computed in any number of ways; standard deviation, for instance, is a common measure of variation that could be used in accordance with the present invention. In the illustrated embodiment, however, I employ the absolute mean deviation. That is, for the illustrated embodiment,

$$M_d = \frac{1}{KL} \sum_{i=y}^{y+L-1} \sum_{j=x}^{x+K-1} |P_{ij} - M_w|, \quad (1)$$

where $P_{ij}$ is the value of the jth pixel in the ith row, K and L are the width and height, respectively, of the window over which the variation is computed, $M_w$ is an average pixel value in that window (and is equal to $M_a$ in the illustrated embodiment), and the upper-left-corner pixel in that window is the xth pixel in the yth row.

The determination of what filter operation to perform is then made by comparing the small-window average $M_b$ with the large-window average $M_a$ and comparing the activity level $M_d$ with an activity threshold value MD_THR, which is derived in a manner that will be described in more detail below.

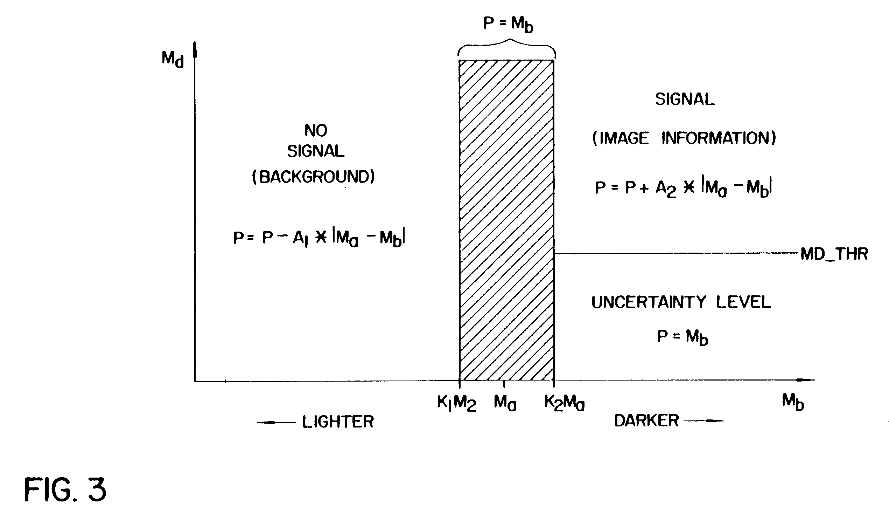

Figure 3 depicts the manner in which the illustrated embodiment uses these four parameters for classification. The abscissa is the smaller-window average $M_b$, while the ordinate is the activity level $M_d$. If $M_b$ is less than the product of some constant $k_1$ and the larger-window average $M_a$, then the pixel is considered to be in a background region, and the output value is one computed in accordance with the following function.

$P_o = P_i - A_1 |M_a - M_b|, \quad (2)$

EP 0 531 904 A2

where $P_o$ is the output pixel value, $P_i$ is the input pixel value, and $A_1$ is a constant. This is the background region, and the application of equation (2) tends to drive the pixel value farther into the background region. That is, in the case of the typical microfilm, where the lighter areas (which, in this case, have lower numerical values) represent the background, the light values are made even lighter.

If the input pixel value is greater than a second constant $k_2$ times the larger-window average $M_a$, then the replacement value depends on what the activity level $M_d$ is around that pixel. If it is greater than the general activity level MD__THR, then the pixel is replaced in accordance with the following equation:

$$P_o = P_i + A_2 |M_a - M_b|, \qquad (3)$$

where $A_2$ is a constant. I have typically used the same values for $A_1$ and $A_2$, but this is not necessary.

Reflection reveals that the application of equations (2) and (3) has the effect of applying a high-pass function to the pixel values; those equations tend to amplify any differences between individual pixel values and the surrounding average.

On the other hand, if a pixel whose filtered value $M_b$ exceeds $k_2 M_a$ is associated with a window whose variation $M_d$ is less than the variation threshold MD__THR, the system applies a low-pass function; that is, it replaces the individual pixel with the smaller-window average $M_b$ and this acts to smooth the image and de-emphasize differences between pixel values.

Figure 3 also depicts the region between $M_b = k_1 M_a$ and $M_b = k_2 M_a$ as being subjected to the low-pass function. In this region, in which the small-window average is nearly equal to the large-window average, no general variation is occurring, and any significant difference between the particular pixel value under consideration and the values of the surrounding pixels should be suppressed. As a practical matter, I let $k_1$ and $k_2$ be set by the system quantization error; that is, the region between $M_b = k_1 M_a$ and $M_b = k_2 M_a$ in the drawing actually represents the situation in which $M_b = M_a$ to within the quantization error of the calculations. One might similarly reserve for separate treatment a horizontal small-difference region around $M_d =$ MD__THR like the vertical region around $M_b = M_a$, but I have found no particular advantage for such an arrangement in the application for which the illustrated embodiment is intended.

It should be recognized that the high- and low-pass equations used here are merely exemplary. Those skilled in the art will be aware of many others. On the right side of equations (2) and/or (3), for example, $P_i$ could be replaced with $M_b$--or vice versa--and similar (although not identical) results would be obtained.

We now turn to the manner in which the activity threshold MD__THR is computed in the illustrated embodiment. This value is intended to approximate the general variation level (or, in some embodiments, some fraction or multiple of it, perhaps with a constant added or subtracted) in the image as a whole. But the most accurate way to find such a level would require two passes through the image, and there are speed as well as cost considerations in some applications that make a two-pass process undesirable. Accordingly, the illustrated embodiment employs a routine illustrated in Figure 4 for gradually adjusting the activity threshold as the scanning proceeds.

The overall approach in the Figure 4 routine is to keep a single value of the activity threshold MD__THR throughout a whole scan line but to update it at the end of each scan line in accordance with an intermediate variation-indicating value IMG__MD. The routine so varies IMG__MD during the line scan that it tends toward the average of the variations in the windows of those pixels whose window variations exceed a level PREV__MD that the routine has identified as being the average variation in certain low-spatial-frequency regions of the image.

At the beginning of each image, the Figure 4 routine initializes the activity threshold MD__THR as well as three variables IMG__MD, PREV__MD, and BG__MD used in the routine, as block 40 indicates. In the illustrated embodiment, in which eight-bit resolution yields a pixel-value range of 0-255, I have used a value of eight, but this is not at all critical. Figure 4 departs from the usual flow-chart convention by depicting two parts of the routine as operating in parallel. One part, which will be described below, begins with decision block 42, while the other part, which is employed to establish the average activity level (i.e., variation) PREV__MD in low-frequency regions, begins with another decision block 44. Like MD__THR, PREV__MD is updated only at the end of each scan line. In the interim, a temporary value BG__MD, from which PREV__MD is updated, is adjusted by the part of the Figure 4 routine that starts with block 44.

The purpose of this block is to identify pixels that are most likely to be in low-spatial-frequency regions. For this purpose, block 44 employs as a criterion the equality of (actually, less than a quantization-error difference between) $M_a$ and $M_b$, i.e., between the larger- and smaller-window averages. If the pixel under consideration meets this criterion, then BG__MD is adjusted up or down slightly toward the activity level $M_d$ within that particular pixel's larger window. Specifically, if a step represented by decision block 46 determines that BG__MD exceeds $M_d$, then BG__MD is decreased by 1/100 in a step represented by block

4

48; that is, step 48 must be reached one hundred times to change BG__MD by one unit at the pixel-value resolution. If BG__MD does not exceed $M_d$, it is increased by 1/100 in a step represented by block 50.

Such an adjustment of BG__MD occurs for every pixel that meets the criterion of block 44. At the end of every scan line, the average low-frequency-region activity-level value PREV__MD is updated to equal BG__MD, as block 52 indicates.

This PREV__MD value is used in the first step, represented by block 42, of the other parallel routine. Specifically, the decision step of block 42 compares the current pixel's activity level $M_d$ with the low-frequency-region activity level PREV__MD. If it is not at least equal to that low-frequency-region activity level, then the value of the variation within the current pixel's window will not be used to affect the activity threshold MD__THR. Otherwise, the temporary-value variable IMG__MD from which the activity-level threshold MD__THR is updated is adjusted slightly up or down toward the variation $M_d$ within the current pixel's window, as blocks 54, 56, and 60 indicate. Then, when the end of a scan line is reached as determined by a block-62 decision, the activity threshold MD__THR is adjusted in accordance with the equation of block 64. As that block shows, the activity threshold MD__THR is essentially adjusted half way from its previous value to the current value of IMG__MD at the end of each line. (The "bias" represented by the "+1" in the equation is used only to overcome an artifact of the limited-precision arithmetic used in the calculation.)

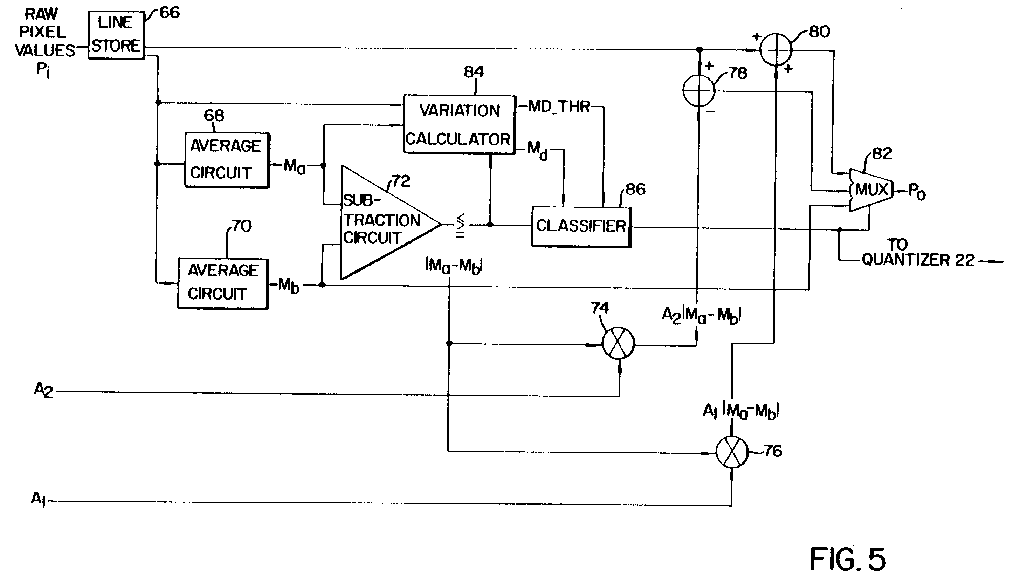

Figure 5 depicts a simplified block diagram of the type of hardware that might be employed for implementing this invention in real time. A line store 66 receives the raw pixel values from the scanning device and accumulates the pixel values in a group of scan lines equal in number to the height of the larger windows. At the pixel-scan rate, it applies to average-computing circuits 68 and 70 a window's worth of pixel values for the large and small windows, respectively. These circuits compute $M_a$ and $M_b$, which they apply to a subtraction circuit 72. Circuit 72 sends the magnitude part of the result--i.e., the absolute value--to two multipliers 74 and 76, which receive the high-pass-equation constants $A_1$ and $A_2$ from appropriate registers not shown in the drawings. The values used for these constants are not critical, but I have satisfactorily employed a value of eight for both constants in a system in which the pixel values are given with eight-bit resolution. Adders 78 and 80 respectively subtract and add these values from and to the input pixel value for the pixel currently under consideration and apply the results to a three-input multiplexer 82.

At the same time, a variation-calculating circuit 84 uses the output of the line store 66 and the $M_a$ value from averaging circuit 68 to compute the variation $M_d$ inthe larger window's pixel values. From this and the line-store output, it also generates the activity threshold MD__THR. On the basis of the resulting MD__THR and $M_d$ values and of an output of subtraction circuit 72 that indicates whether $M_b$ is greater than, equal to, or less than $M_a$, a classifier 86 classifies the current pixel in accordance with the Figure-3 scheme and applies to the multiplexer 82 a select signal that represents the Figure-3 class to which the pixel currently under consideration belongs. The multiplexer 82 then selects among the (low-pass) $M_b$ value from the averaging circuit 70 and the two high-pass-filter outputs from adders 78 and 80 to produce the proper replacement pixel value. In the illustrated embodiment, the classifier 86 may additionally supply its output to the quantizer 22 if that quantizer is of the type described in my co-pending U.S. patent application for a Spatially Variant Filtering System filed on even date herewith.

It is clear from the foregoing description that the broader teachings of the present invention can be employed in a variety of embodiments that differ significantly from that illustrated in the drawings. For instance, while the embodiment described in the drawings classifies pixels in accordance with two criteria, namely, intensity averages and variation averages, more or fewer criteria can be employed for the classification process. In particular, although the present invention is particularly advantageous for textual images, it can also be employed for other types of images, such as natural images, for some of which the background-versus-signal classification may not be helpful. For such images, one might use only the variation criterion or the variation criterion in connection with some other criterion.

Also, the pixel data have been described as scalar values, which they are if the image is a gray-scale image or the classification is based on the luminance data from a color image. Clearly, however, the broader aspects of the invention can be used on, for instance, the separate red, green, and blue components of an RGB color system.

Additionally, even in systems that are very similar to that of the illustrated embodiment, many variations are possible. For instance, although the pixels are shown as being centered within the windows on which their processing is based, there may be applications for which some offset is desirable or convenient. Furthermore, although the same window is used in the illustrated embodiment for computing both the local activity level $M_d$ and the larger-neighborhood average $M_a$, there is clearly no necessity that those windows be the same. Moreover, the same, smaller window is used both for distinguishing between background and signal regions and for performing low-pass filtering. Such an arrangement is not necessary, either.

Accordingly, the present invention can be used in a wide range of embodiments and thus constitutes a significant advance in the art.

**Claims**

1. In the method of processing an image of an image source that comprises scanning the image source to generate raw pixel values associated with respective pixels in a raw version of the source's image, generating processed pixel values by performing an image process on the raw pixel values, and storing the processed image values in an appropriate medium or displaying the image represented thereby, the image process comprising a set of at least one processing step, each processing step in the sequence producing associated pixel-value outputs representing a version of the image by processing respective pixel-value inputs representing the values of corresponding pixels in at least one said version of the image, the improvement wherein one said processing step comprises:

    A) establishing a variation window associated with each pixel and computing the variation in said one processing step's input's pixel values associated with the pixels in that variation window;

    B) for each of a plurality of pixels in the image, making a process choice between performing and refraining from performing one of a high-pass and a low-pass operation thereon, the process choice depending on the variation computed for that pixel; and

    C) in accordance with the process choices, generating pixel output values by performing said one of a high-pass and a low-pass operation on some of the input pixel values but not performing it on others.

2. A method as defined in claim 1 wherein the variation employed in the step of making a process choice depends on whether the variation is above or below a variation threshold.

3. A method as defined in claim 2 wherein the process choice depends on whether the variation is above or below a variation threshold.

4. A method as defined in claim 3 wherein the variation threshold is variable and the variation-threshold value used to make the process choice for a given pixel depends on the variations in the variation windows of other pixels in the image.

5. A method as defined in claim 4 wherein:

    A) the method further comprises:

        i) establishing a local-average window for each of at least some of the pixels in the image and computing a local average pixel value for that local-average window; and

        ii) establishing a neighborhood-average window for each pixel and computing a neighborhood-average pixel value for that local-average window; and

    B) the variation threshold used to make the process choice for any given pixel is a function only of pixels whose local averages differ from their neighborhood averages by less than a predetermined maximum.

6. A method as defined in claim 1 wherein the process choice depends on whether the variation is above or below a variation threshold.

7. A method as defined in claim 6 wherein the variation threshold is variable and the variation-threshold value used to make the process choice for a given pixel depends for any given pixel on the variations in the variation windows of other pixels in the image.

8. A method as defined in claim 7 wherein:

    A) the method further comprises:

        i) establishing a local-average window for each of at least some of the pixels in the image and computing a local average pixel value for that local-average window; and

        ii) establishing a neighborhood-average window for each pixel and computing a neighborhood-average pixel value for that local-average window; and

    B) the variation threshold used to make the process choice for any given pixel is a function only of pixels whose local averages differ from their neighborhood averages by less than a predetermined maximum.

6

9. A method as defined in claim 1 wherein:
A) the method further includes the steps of:
i) establishing a local-average window for each of at least some of the pixels in the image and computing a local average pixel value for that local-average window; and
ii) establishing a neighborhood-average window for each of at least some of the pixels in the image and computing a neighborhood-average pixel value for that local-average window; and
B) the process choice further depends on whether the neighborhood average exceeds the local average.

10. A method as defined in claim 9 wherein the process choice depends on whether the variation is above or below a variation threshold.

11. A method as defined in claim 10 wherein the step of generating a pixel output value comprises:
A) for each input pixel value for which the local average is on a first, background side of a first constant times the neighborhood average, performing a high-pass operation thereon to generate a corresponding output pixel value; and
B) for each input pixel value for which the local average is on the other, signal side of a second constant times the neighborhood average, generating a corresponding output pixel value by:
i) performing a high-pass operation on that input pixel if the variation in the pixel values in the variation window is greater than the variation threshold; and
ii) performing a low-pass operation on that input pixel if the variation in the pixel values in the variation window is less than the variation threshold.

12. In the method of recording an image of an image source that comprises scanning the image source to generate raw pixel values associated with respective pixels in the source's image, generating processed pixel values by performing an image process on the raw pixel values, and storing the process image values in an appropriate medium or displaying the image represented thereby, the image process comprising a sequence of at least one processing step, each processing step in the sequence producing associated pixel-value outputs by processing respective pixel-value inputs representing the values of corresponding pixels in an image, the input of the sequence's first processing step being the raw pixel values, and those of any other processing step being the pixel-value outputs of the previous step in the sequence, the improvement wherein one said processing step comprises:
A) establishing a variation window associated with each pixel and computing the variation in said one processing step's input's pixel values associated with the pixels in that variation window;
B) establishing a local-average window for each of at least some of the pixels in the image and computing a local average pixel value for that local-average window;
C) establishing a neighborhood-average window for each of at least some of the pixels in the image and computing a neighborhood-average pixel value for that local-average window;
D) for each of a plurality of pixels in the image, making a process choice between performing and refraining from performing one of a high-pass and a low-pass operation thereon, the process choice depending on whether the neighborhood average exceeds the local average; and
E) in accordance with the process choices, generating pixel output values by performing said one of a high-pass and a low-pass operation on some of the input pixel values but not performing it on others.

13. In an apparatus for processing an image of an image source that comprises means for scanning the image source to generate raw pixel values associated with respective pixels in a raw version of the source's image, means for generating processed pixel values by performing an image process on the raw pixel values, and means for storing the processed image values in an appropriate medium or displaying the image represented thereby, the means for generating processed pixel values comprising a set of at least one processing circuit, each processing circuit in the set producing associated pixel-value outputs representing a version of the image by processing associated pixel-value inputs representing the values of corresponding pixels in at least one said version of the image, the improvement wherein one said processing circuit comprises:
A) means for establishing a variation window associated with each pixel and computing the variation in said one processing circuit's input's pixel values associated with the pixels in that variation window;

B) means for making, for each of a plurality of pixels in the image, a process choice between performing and refraining from performing one of a high-pass and a low-pass operation thereon, the process choice depending on the variation computed for that pixel; and

C) means for generating pixel output values in accordance with the process choices by performing said one of a high-pass and low-pass operation on some of the input pixel values but not performing it on others.

14. An apparatus as defined in claim 13 wherein the variation employed in the means for making a process choice depends on whether the variation is above or below a variation threshold.

15. An apparatus as defined in claim 14 wherein the process choice depends on whether the variation is above or below a variation threshold.

16. An apparatus as defined in claim 15 wherein the variation threshold is variable and the variation-threshold value used to make the process choice for a given pixel depends on the variations in the variation windows of other pixels in the image.

17. An apparatus as defined in claim 16 wherein:

A) the apparatus further comprises:

i) means for establishing a local-average window for each of at least some of the pixels in the image and for computing a local average pixel value for that local-average window; and

ii) means for establishing a neighborhood-average window for each pixel and for computing a neighborhood-average pixel value for that local-average window; and

B) the variation threshold used to make the process choice for any given pixel is a function only of pixels whose local averages differ from their neighborhood averages by less than a predetermined maximum.

18. An apparatus as defined in claim 13 wherein the process choice depends on whether the variation is above or below a variation threshold.

19. An apparatus as defined in claim 18 wherein the variation threshold is variable and the variation-threshold value used to make the process choice for a given pixel depends for any given pixel on the variations in the variation windows of other pixels in the image.

20. A method as defined in claim 19 wherein:

A) the apparatus further comprises:

i) means for establishing a local-average window for each of at least some of the pixels in the image and for computing a local average pixel value for that local-average window; and

ii) means for establishing a neighborhood-average window for each pixel and for computing a neighborhood-average pixel value for that local-average window; and

B) the variation threshold used to make the process choice for any given pixel is a function only of pixels whose local averages differ from their neighborhood averages by less than a predetermined maximum.

21. An apparatus as defined in claim 13 wherein:

A) the apparatus further includes:

i) means for establishing a local-average window for each of at least some of the pixels in the image and for computing a local average pixel value for that local-average window; and

ii) means for establishing a neighborhood-average window for each of at least some of the pixels in the image and for computing a neighborhood-average pixel value for that local-average window; and

B) the process choice further depends on whether the neighborhood average exceeds the local average.

22. An apparatus as defined in claim 21 wherein the process choice depends on whether the variation is above or below a variation threshold.

23. An apparatus as defined in claim 22 wherein the means for generating a pixel output value comprises:

EP 0 531 904 A2

A) means for performing, for each input pixel value for which the local average is on a first, background side of a first constant times the neighborhood average, a high-pass operation thereon to generate a corresponding output pixel value; and

B) means for generating, for each input pixel value for which the local average is on the other, signal side of a second constant times the neighborhood average, a corresponding output pixel value by:

i) performing a high-pass operation on that input pixel if the variation in the pixel values in the variation window is greater than the variation threshold; and

ii) performing a low-pass operation on that input pixel if the variation in the pixel values in the variation window is less than the variation threshold.

24. In an apparatus for processing the image of an image source that comprises means for scanning the image source to generate raw pixel values associated with respective pixels in a raw version of the source's image, means for generating processed pixel values by performing an image process on the raw pixel values, and means for storing the process image values in an appropriate medium or displaying the image represented thereby, the means for generating processed pixel values comprising a set of at least one processing circuit, each processing circuit in the set producing associated pixel-value outputs representing a version of the image by processing associated pixel-value inputs representing the values of corresponding pixels in at least one said version of the image, the improvement wherein one said processing circuit comprises:

A) means for establishing a variation window associated with each pixel and computing the variation in said one processing circuit's input's pixel values associated with the pixels in that variation window;

B) means for establishing a local-average window for each of at least some of the pixels in the image and computing a local average pixel value for that local-average window;

C) means for establishing a neighborhood-average window for each of at least some of the pixels in the image and computing a neighborhood-average pixel value for that local-average window;

D) means for making, for each of a plurality of pixels in the image, a process choice between performing and refraining from performing one of a high-pass and a low-pass operation thereon, the process choice depending on whether the neighborhood average exceeds the local average; and

E) means for generating pixel output values in accordance with the process choices by performing said one of a high-pass and a low-pass operation on some of the input pixel values but not performing it on others.

9

FIG. 1

FIG. 2

EP 0 531 904 A2

$P = M_b$

SIGNAL

(IMAGE INFORMATION)

$P = P + A_2 * |M_a - M_b|$

MD_THR

UNCERTAINTY LEVEL

$P = M_b$

$M_b$

DARKER

$M_d$

NO
SIGNAL
(BACKGROUND)

$P = P - A_1 * |M_a - M_b|$

$K_1 M_2$    $M_a$    $K_2 M_a$

LIGHTER

FIG. 3

11

FIG. 4

EP 0 531 904 A2

FIG. 5

EP 0 531 904 A2